# EUROPÄISCHE PATENTSCHRIFT

(11) **EP 0 447 580 B1**
(45) Veröffentlichungstag und Bekanntmachung des Hinweises auf die Patenterteilung: **09.10.1996**
(21) Anmeldenummer: 90105138.3
(22) Anmeldetag: 19.03.1990
(51) Int. Cl.: G01D 7/00

(54) **Messvorrichtung**
Measuring apparatus
Dispositif de mesure

(43) Veröffentlichungstag der Anmeldung: 25.09.1991
(73) Patentinhaber: Nüchter, Karl-Bernhard, D-63303 Dreieich (DE)
(72) Erfinder: Nüchter, Karl-Bernhard, D-63303 Dreieich (DE)
(74) Vertreter: Linser, Heinz

(56) Entgegenhaltungen:
- EP-A- 0 031 716
- EP-A- 0 194 437
- EP-A- 0 288 671
- EP-A- 0 330 942
- DE-A- 3 238 487
- DE-A- 3 837 592

## Beschreibung

Die Erfindung betrifft eine Meßvorrichtung mit mindestens einem Meßsensor und einer Meßwertanzeigevorrichtung mit Flüssigkristallen und einer aufgeprägten, für alle Skalendarstellungen gültigen, kreisrund angeordneten Stricheinteilung sowie einer digitalen und analogen Anzeige, wobei die durch Flüssigkristalle darstellbaren digitalen Skalenwerte sowie die Dimensionen der zu messenden physikalischen Größen der Meßwertanzeigevorrichtung von mindestens einem Mikroprozessor in Abhängigkeit von dem oder den Meßsensoren und ihren jeweils gemessenen absoluten oder errechneten Meßwerten automatisch steuerbar ausgebildet sind, und eine dem jeweiligen Meßwert zugeordnete und maximal angepaßte Meßskala mit ihrer zugehörigen Dimension dargestellt wird.

Mit der Entwicklung und Einführung nematischer Flüssigkeiten kamen auch Meßvorrichtungen in Form von Uhren auf den Markt, welche mit einer digitalen Meßwertanzeige versehen sind.

Die reine digitale Anzeige von Meßwerten setzt einen mentalen Umgewöhnungsprozeß voraus, welcher sich nicht durchsetzen konnte. Aus diesen und anderen Gründen sind auch Uhren mit digitalen und analogen Meßwertanzeigen bekannt, wobei die auf einem kleineren Feld darstellbaren digitalen Anzeigen auch zur Anzeige verschiedener Werte dienen, wie beispielsweise weitere Uhrzeiten in europäischer oder amerikanischer Darstellung, Stoppzeiten und Datum.

Bei elektrischen Meßgeräten ist es ferner bekannt, verschiedene Skalen mit unterschiedlichen Bereichen anzugeben, welche jeweils einem bestimmten Meßbereich zugeordnet sind, der zuvor durch Betätigung eines Bereichsschalters ausgewählt wird. Der Vorteil eines solchen Meßgerätes besteht darin, daß ein weiter Bereich und unterschiedliche physikalische Größen, wie eine elektrische Spannung, ein Strom oder ein Widerstand mit einem einzigen Gerät gemessen werden können. Ein wesentlicher Nachteil besteht jedoch darin, daß sich die Meßwerte wegen der Vielzahl der nebeneinanderliegenden Skalen schlecht ablesen lassen, so daß sehr oft Ablesefehler erfolgen.

Hochwertige Meßgeräte, beispielsweise zur Messung der Temperatur, des Druckes und anderer physikalischer Werte, werden nur für einen bestimmten Meßbereich ausgelegt und mit der dazugehörigen Skala versehen. Hierdurch ist eine große Genauigkeit sowohl der Meßwerterfassung durch Auslegung des Meßgerätes als auch seiner Skala erreichbar. Der Nachteil liegt jedoch darin, daß für eine größere Meßbereichsbandbreite mehrere Geräte vorgesehen werden müssen, wodurch eine erhebliche Lagerhaltung erforderlich ist.

Schließlich sind auch mechanische Zeigermeßinstrumente bekannt, welche Extremwerte speichern, wobei jedoch praktisch nur mit Hilfe von Schreibgeräten die Zeit registrierbar ist, zu der die Extremwerte aufgetreten sind. Solche Geräte sind äußerst aufwendig, nehmen einen großen Raum ein und benötigen auch eine relativ große Betriebsenergie, so daß sie sich nur für stationäre Anlagen eignen.

Für die Steuerung und Kontrolle von Betriebsanlagen und Anlagen der unterschiedlichsten Art im Feld und auch stationär ist es von Bedeutung, eine größere Anzahl von physikalischen Meßgrößen genau zu erfassen, Schwankungen dieser Werte, insbesondere ihre Extremwerte zusammen mit der Zeit ihres Auftretens abrufbar festzuhalten und gegebenenfalls mit Alarmanlagen oder Registriervorrichtungen zu koppeln.

Aus der DE 32 38 487 Al ist ein Verfahren zur Darstellung physikalischer Meßgrößen bekannt, bei dem die Kombination analoger und digitaler Meßwertdarstellungen zur Anwendung kommt. So werden der minimale, der maximale und der Istwert digital angezeigt und der Istwert erscheint ferner auf einer skalenmäßigen Darstellung. Eine schnelle Erfassung des Istwertes ist bei dieser bekannten Ausführungsform nur über den Digitalwert möglich, so daß der Vorteil einer Analoganzeige nicht ausgenutzt wird.

Aus der EP-A- 0 031 716 ist eine Meßwertanzeigevorrichtung bekannt, welche eine analoge und digitale Anzeige aufweist, wobei die Stricheinteilung und die Bezifferungen auf der Anzeige fest eingraviert sind, während ein Zeiger durch Flüszigkristalle dargestellt ist. Hierbei soll die analoge Meßwertdarstellung durch eine genauere digitale Meßwertangabe ergänzt werden. In einem Signalverarbeitungskreis ist ein Mikroprzessor eingesetzt, womit digitaler Signalvergleich, Zählung etc. ausgeführt wird. Bei einer Meßwertveränderung mit einer relativ geringen Geschwindigkeit ändern sich die digitalen Angaben in einer noch für das Auge ablesbaren Weise, so daß dadurch die Ablesegenauigkeit erhöht wird. Der Anzeigebereich ist jedoch festgelegt. Ein solches Gerät läßt sich nur für eng begrenzte Anwendungen einsetzen und läßt sich nicht universell verwenden.

Aus der EP-A-0 330 942 ist eine Meßwertanzeigevorrichtung bekannt, bei der die Skalenbezifferung ebenfalls durch eine Flüssigkristallanzeige dargestellt ist, wobei sich die Skala in eine vorbestimmte weitere Skala mit einem unterschiedlichen Bereich umschalten läßt. Dadurch wird in einem unteren Skalenbereich ein Lupeneffekt erreicht.

Aus der EP-A2 0288671 ist ein Meßgerät für die Messung physikalischer Größen bekannt, welches eine programmierbare Anpassungselektronik mit einem Einheitsmeßwerk und eine programmierbare Skala zum Anzeigen einer aus einer Anzahl der verschiedensten Meßgrößen beliebig wählbaren Meßgröße aufweist. Die Programmiereinheit weist ferner Treiberschaltungen für eine elektronisch beschriftbare Skala auf und für die Anpassungselektronik ist zusätzlich ein Multiplexer zum gleichzeitigen Erfassen und Anzeigen mehrerer Meßgrößen vorgesehen.

Der Erfindung liegt die Aufgabe zugrunde, eine Heßvorrichtung vorzuschlagen, deren Skalendarstellung einem herkömmlichen Analoggerät entspricht, welche eine Vielzahl von Skalen für jeweils zugeordnete Meßbereiche aufweist, wobei mindestens eine dem Meßwert maximal angepaßte Skala dargestellt wird, welche äußerst wenig Energie benötigt und damit netzunabhängig betreibbar ist, die Meßwerte mehrerer Sensoren sequentiell, vorzugsweise aber gleichzeitig darstellen, aufzeichnen und mit weiteren Meßdaten verarbeiten kann.

Die Lösung dieser Aufgabe besteht nach der Erfindung darin, daß die Maßwertanzeigevorrichtung durch Flüssigkristalle dargestellte Zeiger zur analogen Anzeige gleicher oder unterschiedlicher physikalischer Größen aufweist, wobei zuei Zeigerdarstellungen auf unterschiedlichen Kreisradien angeordnet und gegeneinander gerichtet sind. Hierdurch ergibt sich eine große Möglichkeit von Meßwertdarstellungen, beispielsweise von Ist- und Sollwerten, von Ist- und Differanzuerten und dergleichen. Ferner ist es nach der Erfindung auch möglich, unterschiedliche physikalische Größen gleichzeitig analog darzustellen, beispielsweise Drücke und Temperaturen und deren Änderungen durch je einen Zeiger zu veranschaulichen.

In Weiterbildung der Erfindung ist die Meßwertanzeigevorrichtung mit einem mechanischen Zeiger kombiniert, welcher mittels eines Mikromotors ansteuerbar ist. Damit lassen sich beispielsweise drei unterschiedliche Werte gleichzeitig darstellen und miteinander vergleichen oder prüfen.

Die digitale Anzeige der Meßwertanzeigevorrichtung ist nach weiterer Ausgestaltung der Erfindung für die Darstellung mindestens einer physikaischen Größe mit mehreren Feldern versehen, derart, daß der aktuelle Meßwert, sein Maximum, Minimum und Mittelwert in einem vorbestimmbaren Zeitintervall und das Datum sowie die jeweils zugehörige Uhrzeit anzeig- und speicherbar sind. Auch hierbei gilt, daß die digitale Anzeige die wahre Genauigkeit angibt.

Die Stricheinteilungen können in Abwandlung der Erfindung auch elektronisch mit Hilfe der Flüssigkristalle dargestellt werden, wobei der Strichabstand der beabsichtigten Spreizung einer jeden Skala angepaßt ist. Hierdurch läßt sich die auf einer Instrumentenglasplatte aufgedruckte Skala ersetzen oder auch ergänzen.

Neben der Darstellung eines vom Zentrum ausgehenden Zeigers, der einem Uhrzeiger entspricht, können auch ein oder mehrere Punkte, Striche, Zeiger oder Farbunterschiede dargestellt werden, welche auf den aktuellen Meßwert verweisen.

In Weiterbildung der Erfindung weist die Meßvorrichtung einen elektronischen Speicher zur Speicherung der extremen Meßwerte mit dazugehörigen Zeitdaten auf. Hierdurch ist ein Abruf der Daten zu jeder Zeit und zwar direkt oder auch von entfernt liegenden Stellen möglich, wobei stets festgehalten ist, zu welcher Zeit der entsprechende Extremwert auftrat. Dies ist besonders für Kontrollgeräte von großer Bedeutung.

In einer weiteren Ausführungsform der Erfindung weist die Meßvorrichtung mehrere Sensoren für die Messung gleicher oder unterschiedlicher physikalischer Größen auf, deren Meßwerte vom Prozessor getaktet sequentiell oder auch gleichzeitig der zugeordneten Skala zur Anzeige gebracht werden können. Damit lassen sich beispielsweise Temperaturen und/oder Drucke oder auch andere physikalische Werte an verschiedenen Stellen in einer vorgegebenen Reihenfolge abfragen, anzeigen und aufzeichnen.

Um die Möglichkeit vorzusehen, die gemessenen und gespeicherten Werte durch einen Ausdruck oder ein Meßblatt bzw. durch eine Zeichnung ausgeben zu können, sind Kommunikationsanschlüsse (V/24) vorgesehen.

Die Meßvorrichtung nach der Erfindung weist in ihrer Schaltung mindestens einen Verstärker und einen Analog/Digitalwandler zur Verstärkung und Umwandlung der analogen Meßsensorwerte auf.

Die Energieaufnahme der verwendeten elektronischen Schaltung einschließlich der Flüssigkristallanzeige ist sehr gering, so daß die Energieversorgung mittels Batterien erfolgt.

Die Meßwertanzeigevorrichtung weist in einer weiteren Ausführungsform Flüssigkristalle zur Darstellung farbiger Skalen und Meßwerte auf. Es lassen sich damit prozessorgesteuert bestimmte Meßwerte, zum Beispiel negative Temperaturwerte in einer anderen Farbe als die positiven Werte darstellen, so daß damit eine weitere wichtige Hinweis- oder Alarmfunktion erfüllt werden kann.

Mit Hilfe einer Eingabevorrichtung, beispielsweise einer Zifferntastatur lassen sich Meßwerte eingeben, so daß bei deren Erreichen eine Signalgabe erfolgt.

Die Erfindung wird anhand der Figuren näher erläutert. Hierbei zeigen:
- FIGUR 1:: eine schematische Darstellung eines Schaltbildes der Meßvorrichtung;
- FIGUR 2:: die Draufsicht auf eine Skale mit einem elektronischen Zeiger;
- FIGUR 3:: die Draufsicht auf eine Skale mit zwei elektronischen Zeigern, die gegeneinander gerichtet sind, und
- FIGUR 4:: eine Reihe von Skalen, welche durch Umschaltung oder in einer automatischen Folge auf der Anzeigevorrichtung abrufbar sind.

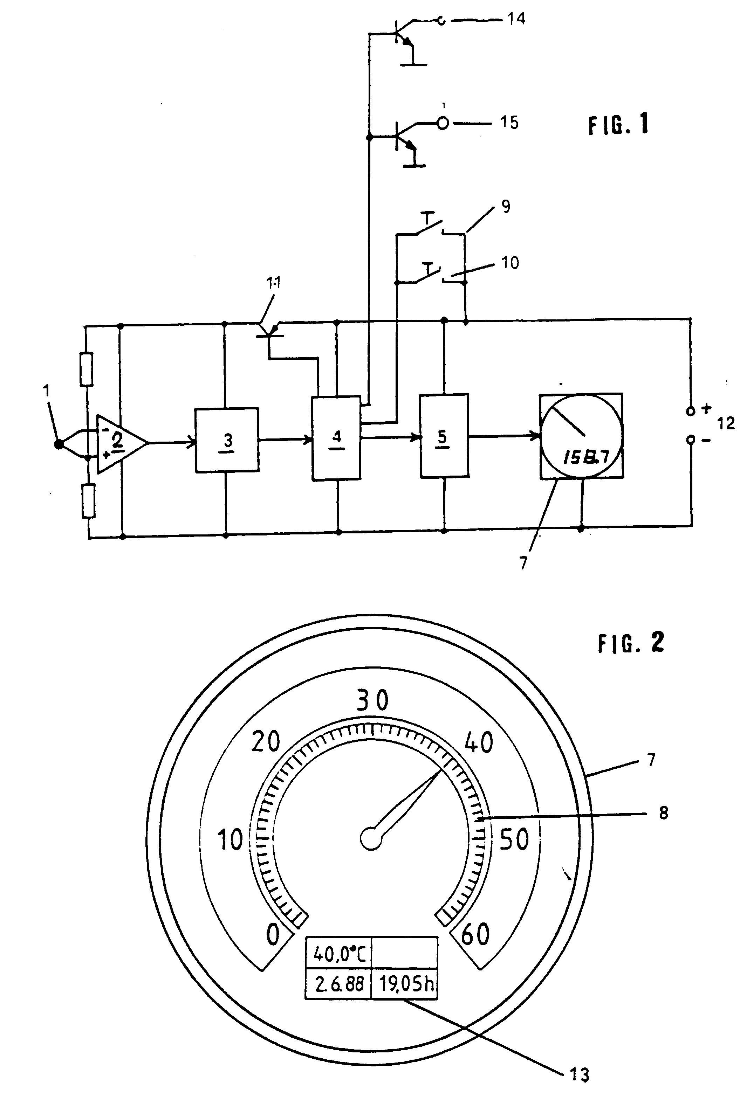

In Figur 1 bezeichnet 1 einen Sensor, dessen aufgenommene Meßwerte als elektrische Größen durch den Meßverstärker 2 verstärkt dem Analog/Digitalwandler 3 zugeführt werden. Die Digitalwerte gelangen zum Mikroprozessor 4, welcher die Steuerung des gesamten Meßgerätes bewirkt.

Der Mikroprozessor 4 beaufschlagt einen Anzeigentreiber 5 und steuert einen damit kombinierten Speicher, welcher nicht gesondert dargestellt ist. Der Anzeigentreiber 5 übernimmt, angesteuert vom Mikroprozessor 4, die Steuerung der Flüssigkristallanzeige 7, welche in Figur 2 schematisch und in Draufsicht wiedergegeben ist.

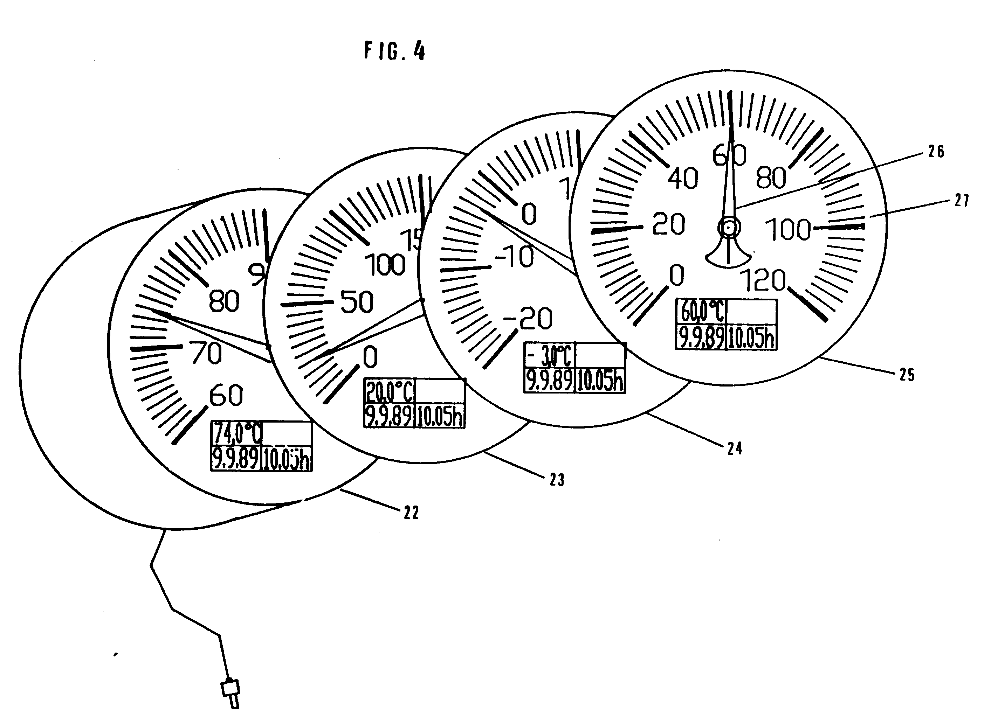

Die in den Figuren 2 und 4 dargestellten Ausführungsbeispiele der Erfindung geben ein Temperaturmeßgerät wieder.

Die Grundprinzipien der Erfindung sind jedoch nicht von der zu messenden physikalischen Größe abhängig, so daß das gleiche Prinzip auch für Druckmeßgeräte, kombinierte Druck- und Temperaturmeßgeräte, Geräte zur Messung mechanischer oder elektrischer Größen oder dergleichen gilt.

Die Temperatur wird in dem hier dargestellten Ausführungsbeispiel ständig durch eine Skala 8 angezeigt. Die Skala 8 hat 60 Segmente und bildet einen Kreisbogen von ca. 300 Winkelgraden. Sie beginnt nach Figur 2 bei 0°C und weist Meßwertangaben bei 10, 20, 30, 40, 50 und 60 °C auf. Um eine Überlappung bei einer Messbereichsumschaltung zu gewährleisten, beginnt die nicht näher dargestellte nächste Skale beispielsweise bei 40°C und reicht bis 100°C oder bei 10 °C und reicht bis zu minus 30 °C, je nachdem wie das Meßgerät ausgelegt wird und für welchen Zweck es bestimmt ist. Es sind auch andere Einteilungen und Spreizungen ausführbar und es ist auch möglich zu jedem Meßbereich eine gespreizte Skala durch Knopfbetätigung auszuwählen.

Die Skala ist während des Meßvorganges dauernd eingeschaltet. Der angezeigte Temperaturwert wird, um Batteriestrom zu sparen, beispielsweise alle 15 Sekunden gemessen und die Anzeige korrigiert. Nach Möglichkeit soll sich der Prozessor in der Zwischenzeit in einem stromsparenden stand-by Modus befinden.

Zusätzlich besitzt das Instrument eine vierstellige Digitalanzeige 13 . Auf Druck einer Taste 9 zeigt diese Digitalanzeige die Temperatur dreistellig, mit einer Stelle hinter dem Komma, in °C an. In diesem Modus wird die Temperatur einmal pro Sekunde gemessen. Dieser Modus bleibt nach Tastendruck 3 Minuten erhalten, danach wird wieder auf den stromsparenden 15-Sekunden-Takt zurückgeschaltet.

Durch ein zweites Drücken der Taste 9 erscheint die Uhrzeit auf der Anzeige. In diesem Modus kann die Uhrzeit durch Drücken einer zweiten Taste 10 gestellt werden.

Nach weiterem Drücken der Taste 9 wird das Minimum der gemessenen Temperatur angezeigt. Dies ist der Minimalwert der Temperatur seit der letzten Betätigung der Taste 10 in diesem Modus. Durch Drücken der Taste 10 wird der Minimalwert gelöscht und von diesem Moment ab ein neuer Minimalwert alle 15 Sekunden aktualisiert. Ein nächstes Drücken der Taste 10 schaltet weiter auf die Messung des Maximalwertes. Dieser Maximalwert kann ebenfalls durch Drücken der Taste 10 wieder gelöscht werden, worauf ein neuer Meßzyklus des Maximalwertes beginnt.

Ein weiteres Drücken der Taste 10 bringt in der Digitalanzeige die Durchschnittstemperatur seit dem letzten Löschen des Wertes durch Drücken der Taste 9 zur Anzeige.

Durch den nächsten Druck auf die Taste 10 wird der eingestellte Minimalwert der Alarmfunktion zur Anzeige gebracht. Dieser Minimalwert kann durch Betätigen der Taste 9 eingestellt werden. Bei Unterschreiten dieses Minimalwertes wird ein Schalttransistor in dem Thermometer durchgeschaltet. Dieses Signal ist zugänglich über eine Steckverbindung an der Rückseite des Gerätes. Durch einen weiteren Druck auf die Taste 10 wird auf den Maximalwert der Alarmfunktion umgeschaltet. Dieser Maximalwert kann durch Drücken der Taste 9 eingestellt werden.

Bei Überschreiten des eingestellten Maximalwertes wird ein zweiter Schalttransistor im Thermometer eingeschaltet. Sein Signal ist ebenfalls über die Steckverbindung 14 an der Rückseite des Gerätes zugänglich.

Durch einen nächsten Tastendruck wird wieder die Funktion "Temperaturanzeige" eingeschaltet.

Es ist natürlich auch möglich eine Tastatur mit einem Ziffernblock 1 bis 0, ähnlich wie bei einem Taschenrechner vorzusehen, so daß jede gewünschte Darstellung unabhängig von einem vorgegebenen Zyklus durch entsprechende Kodifizierung abgerufen werden kann.

Der Meßfühler muß für den gewählten Meßbereich beispielsweise von minus 20°C bis 300°C geeignet sein. Seine Temperaturkurve muß es gestatten, ihn in dem gewünschten Bereich zu linearisieren, so daß die Nichtlinearität zur Erzielung einer entsprechenden Genauigkeit kleiner als eine vorgegebene Größe ist.

Der Meßfühler ist bei dem dargestellten Ausführungsbeispiel nicht auswechselbar, sondern mit dem Gehäuse fest verbunden, so daß die elektronische Schaltung und die dem Speicher eingegebene Fehlerkorrekturkurve dem spezifischen Meßfühler oder Sensor genau angepaßt sein können. Es ist jedoch auch möglich, die Meßschaltung durch verdeckt angeordnete Trimmer auf den Sensor einzustellen. Die Versorgungsspannung des Meßfühlers und des zugehörigen Meßverstärkers wird nur zur Messung eingeschaltet, um die Batterielebensdauer zu erhöhen.

Der Analog-/Digital-Wandler 3 kann im Microprozessor 4 integriert sein oder als separater Baustein aufgebaut sein. Er muß mindestens 3 1/2stellig sein und eine Linearität von +/- 1 lsb, sowie eine Genauigkeit von ebenfalls +/- 1 lsb haben. Wird der A/D-Wandler separat aufgebaut, so wird seine Versorgungsspannung nur zur Messung eingeschaltet, um die Batterielebensdauer zu erhöhen.

Die Anzeige ist eine Flüssigkristallanzeige 7 auf einer vieleckigen Glasplatte.

Das Gehäuse wird aus Edelstahl gefertigt. Es muß mindestens die Schutzklasse IP 54 aufweisen. Die Gehäusevorderseite wird von einer Glasplatte gebildet, die die Anzeige überdeckt. Auf der Gehäuserückseite befindet sich mindestens eine Folientaste zur Bedienung des Gerätes. Auf der Gehäuserückseite unterhalb des Fühlers ist eine Verschlußklappe vorgesehen, unter der sich das Batteriefach befindet. An geeigneter Stelle an der Gehäuserückseite oder am Gehäuseumfang ist eine Steckkupplung angebracht, die an die beiden Alarmausgänge angeschlossen ist. Der Durchmesser des Gehäuses soll etwa 100mm betragen, sofern dies mit der Größe des Batteriefachs vereinbar ist. Das Fühlerschutzrohr ist mit dem Gehäuseboden fest verbunden.

Das Thermometer wird mit drei Volt Versorgungsspannung betrieben. Zur Versorgung dienen zwei Stabbatterien, welche unter der Bezeichnung "Mignon" auf dem Markt erhältlich sind.

Die Betriebsdauer mit einem Batteriesatz soll mind. 1 Jahr betragen.

Durch konstruktive Maßnahmen, insbesondere bei der thermisch leitenden Verbindung zwischen Fühlerrohrschutz und Gehäuse, ist sicherzustellen, daß die Umgebungstemperatur im Gehäuse nicht über 70°C ansteigen kann. Es werden aus diesen Gründen nur SMD-Bauteile verwendet.

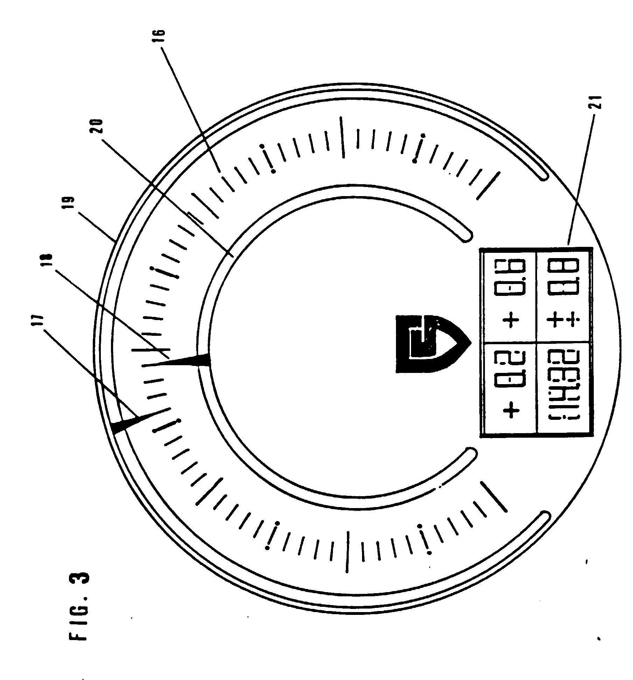

Die Figur 3 zeigt eine Skala 16, welche zwei gegeneinander gerichtete Zeiger 17 und 18 aufweist, die auf getrennten Kreisbahnen 19 und 20 in Flüssigkristalldarstellung "beweglich" sind.

Die Digitalanzeige 21 entspricht der Anzeige 13 nach Figur 2 und weist vier Felder zur Anzeige unterschiedlicher Werte auf.

Die Ausführungsform nach Figur 3 kann zusätzlich mit einem mechanischen Zeiger ausgerüstet werden, welcher im Zentrum des Gerätes angeordnet wird. Damit lassen sich drei Meßwerte oder eine Kombination von Soll- und Istwerten anzeigen.

Die Figur 4 zeigt vier Skalen 22, 23, 24 und 25 auf, welche einen mechanischen Zeiger 26 und eine Skalenstricheinteilung 27 verwendet, welche als mechanisch vorgegebene und eingravierte Einteilung ausgebildet ist. Sie gilt daher für alle anderen Skalendarstellungen gleichermaßen. Durch Umschaltung auf ein anderes Skalenformat ändert sich daher lediglich die digital dargestellten Ziffern des Systems sowie die Zeigerstellung entsprechend dem darzustellenden Meßwert.

Die Erfindung ermöglicht nunmehr den Aufbau und die Kombination einer Reihe von Meßgeräten. So lassen sich unterschiedliche physikalische Meßgrößen zur gleichen Zeit analog anzeigen, beispielsweise Temperatur als Thermometer und Windgeschwindigkeit als Anemometer.

Bei einer Produktionsüberwachung ist es in vielen Fällen erforderlich eine Reihe von Meßgrößen unterschiedlichster Art zu überwachen. Hier läßt sich die Erfindung als Vielfachmeßgerät einsetzen. So müssen bei der Herstellung von Schokolade Temperaturen, Drucke, Viskositäten und Säuregehalte gemessen werden. Diese Werte können nunmehr mit einem Gerät sequentiell überwacht werden.

## Patentansprüche

1. Meßvorrichtung mit mindestens einem Meßsensor (1) und einer Meßwertanzeigevorrichtung (7) mit Flüssigkristallen und einer aufgeprägten, für alle Skalendarstellungen gültigen, kreisrund angeordneten Stricheinteilung sowie einer digitalen und analogen Anzeige, wobei die durch Flüssigkristalle darstellbaren digitalen Skalenwerte sowie die Dimensionen der zu messenden physikalischen Größen der Meßwertanzeigevorrichtung von mindestens einem Mikroprozessor (4) in Abhängigkeit von dem oder den Meßsensoren (1) und ihren jeweils gemessenen absoluten oder errechneten Meßwerten automatisch steuerbar ausgebildet sind, und eine dem jeweiligen Meßwert zugeordnete und maximal angepaßte Meßskala mit ihrer zugehörigen Dimension dargestellt wird, **dadurch gekennzeichnet, daß** die Meßwertanzeigevorrichtung durch Flüssigkristalle dargestellte Zeiger (17, 18) zur analogen Anzeige gleicher oder unterschiedlicher physikalischer Größen aufweist, wobei zwei Zeiger (17,18) auf unterschiedlichen Kreisradien angeordnet und gegeneinander gerichtet sind.

2. Meßvorrichtung nach Anspruch 1, **dadurch gekennzeichnet, daß** die Meßwertanzeigevorrichtung (22-25) mit einem mechanischen Zeiger (26) kombiniert ist, welcher mittels eines Mikromotors ansteuerbar ist.

3. Meßvorrichtung nach Anspruch 1 oder 2, **dadurch gekennzeichnet, daß** die digitale Anzeige (13,21) der Meßwertanzeigevorrichtung für die Darstellung mindestens einer physikalischen Größe mehrere Felder aufweist, wobei der aktuelle Meßwert, sein Maximum, Minimum und Mittelwert in einem vorbestimmbaren Zeitintervall und das Datum sowie die jeweils zugehörige Uhrzeit anzeig- und speicherbar sind.

4. Meßvorrichtung nach Anspruch 1 oder einem der voranstehenden Ansprüche, **dadurch gekennzeichnet, daß** diese einen elektronischen Speicher zur Speicherung der extremen Meßwerte mit dazugehörigen Zeitdaten aufweist.

5. Meßvorrichtung nach Anspruch 1 oder einem der vorangehenden Ansprüche, **dadurch gekennzeichnet, daß** die Meßwertanzeigevorrichtung (7) Flüssigkristalle zur Darstellung farbiger Skalen Meßwerte und Zeiger aufweist.

6. Meßvorrichtung nach Anspruch 1 oder einem der vorangehenden Ansprüche, **dadurch gekennzeichnet, daß** diese eine Dateneingabsvorrichtung aufweist, mit deren Hilfe digitale Meßwerte eingebbar sind, bei deren Erreichen eine Signalgabe erfolgt .

## Claims

1. Measuring device having at least one measuring sensor (1) and a liquid crystal measurement reading display device (7) and a circularly arranged, imprinted scale marking device suitable for all scale displays as well as a digital and analogue display, in which the scale values and the dimensions of the physical values to be measured and digitally displayed by the liquid crystals of the measurement data display device are designed to be automatically controlled by at least one microprocessor (4) on the basis of the measuring sensor or sensors and the respective absolute or calculated measurement values thereof, and a measurement scale assigned to the respective measurement value and pre-set thereto as a maximum are displayed together with their relevant dimensions, characterised in that the measurement reading display device has indicators (17, 18) displayed by liquid crystals to provide an analogue display of the same or differing physical values, in which two indicators (17, 18) are arranged facing one another on different circle radii.

2. Measuring device as claimed in claim 1, characterised in that the measurement reading display device (22-25) is combined with a mechanical indicator (26), which is controlled by a micro-motor.

3. Measuring device as claimed in claim 1 or 2, characterised in that the digital display (13, 21) of the measurement reading display device has several fields for displaying at least one physical value, in which the actual measurement value, its maximum, minimum and mean value within a pre-settable time interval, the date and any other relevant time data can be displayed and stored.

4. Measuring device as claimed in claim 1 or one of the preceding claims, characterised in that it has an electronic memory storage device for storing the extreme measurement values with relevant time data.

5. Measuring device as claimed in claim 1 or one of the preceding claims, characterised in that the measurement reading display device (7) has liquid crystals for displaying scale measurement values and indicators in colour.

6. Measuring device as claimed in claim 1 or one of the preceding claims, characterised in that it has a data input device for the input of digital measurement values that generate a signal when reached.

## Revendications

1. Dispositif de mesure comportant au moins un capteur de mesure (1) et un dispositif d'affichage de la valeur mesurée (7), à cristaux liquides et avec une graduation imprimée, valable pour toutes les échelles, disposée de manière circulaire, ainsi qu'un affichage numérique et analogique, dans lequel les valeurs numérique d'échelle qui peuvent être représentées par les cristaux liquides, ainsi que les dimensions des grandeurs physiques à mesurer par le dispositif d'affichage de la valeur mesurée sont formées de manière à pouvoir être commandées automatiquement par au moins un microprocesseur (4), sous la dépendance du ou des capteurs de mesure (1) et des valeurs de mesure absolues ou calculées mesurées pour chacun, et un cadran de mesure adapté au maximum et associé à la valeur de mesure correspondante est représenté avec sa dimension associée, caractérisé en ce que le dispositif d'affichage de la valeur mesurée présente des index (17, 18) représentés par cristaux liquides, en vue d'un affichage analogique de grandeurs physiques identiques ou différentes, tandis que deux index (17, 18) sont disposés sur des rayons de cercle différents et sont orientés l'un vers l'autre.

2. Dispositif de mesure selon la revendication 1, caractérisé en ce que le dispositif d'affichage de la valeur mesurée (22-25) est combiné à un index mécanique (26) qui peut être commandé au moyen d'un micromoteur.

3. Dispositif de mesure selon la revendication 1 ou 2, caractérisé en ce que l'affichage numérique (13, 21) du dispositif d'affichage de la valeur mesurée présente plusieurs champs pour la représentation d'au moins une grandeur physique, tandis que la valeur mesurée actuelle, sa valeur maximale, sa valeur minimale et sa valeur moyenne dans un intervalle de temps prédéterminé, ainsi que la date et l'heure correspondantes peuvent être affichées et mémorisées.

4. Dispositif de mesure selon la revendication 1 ou l'une des revendications précédentes, caractérisé en ce qu'il présente une mémoire électronique pour mémoriser les valeurs extrêmes de mesure en même temps que les données de temps correspondantes.

5. Dispositif de mesure selon la revendication 1 ou l'une des revendications précédentes, caractérisé en ce que le dispositif d'affichage de la valeur mesurée (7) présente des cristaux liquides pour la représentation en couleurs des échelles des valeurs mesurées et des index.

6. Dispositif de mesure selon la revendication 1 ou l'une des revendications précédentes, caractérisé en ce qu'il présente un dispositif d'introduction de données à l'aide duquel des valeurs mesurées numériques peuvent être introduites, avec à cette occasion production d'un signal.
